# EUROPÄISCHE PATENTANMELDUNG

(11) **EP 4 418 429 A1**
(43) Veröffentlichungstag der Anmeldung: **21.08.2024**
(21) Anmeldenummer: 24156717.1
(22) Anmeldetag: 09.02.2024
(51) Int. Cl.: H01M 50/289, H01M 50/291, H01M 50/293

(54) **SCHUTZSCHILD UND BATTERIESYSTEM, DAS EIN SOLCHEN SCHUTZSCHILD UMFASST**

(30) Priorität: 14.02.2023 DE 102023103536
(71) Anmelder: Carl Freudenberg KG, 69469 Weinheim (DE)
(72) Erfinder: MÖHRING, Dirk, 69509 Mörlenbach (DE); LEICHNER, Dr. Tim, 67591 Mörstadt (DE); Johe, Maik, 64385 Reichelsheim (DE); Neuberger, Soeren, 68766 Hockenheim (DE)

(57) **Zusammenfassung**

Schutzschild aus einem gummielastischen Werkstoff, umfassend eine Zentrallage (1) mit zwei einander gegenüberliegenden Oberflächen (2, 3), wobei jede der Oberflächen (2, 3) eine leistenförmige Oberflächenstruktur (4, 5) mit sich parallel zueinander erstreckenden Leisten (6) aufweist, die auf den jeweiligen Oberflächen (2, 3) mit Abstand (7) benachbart zueinander angeordnet sind und wobei die Leisten (6) der beiden Oberflächenstrukturen (4, 5), im Querschnitt des Schutzschilds betrachtet, einander auf Lücke (8) zugeordnet sind.

## Beschreibung

### Technisches Gebiet

Die Erfindung betrifft ein Schutzschild und ein Batteriesystem, das ein solchen Schutzschild umfasst.

Der Schutzschild kann für eine verbesserte Sicherheit von Lithium-Ionen-Akkus verwendet werden.

Dabei fungiert der Schutzschild primär als Hitzeschild.

Der Schutzschild ist dabei zwischen einzelnen Batteriezellen des Batteriesystems angeordnet und sorgt dafür, dass im Fall einer schadhaften Batteriezelle deren Wärme so lange von den benachbarten Batteriezellen isoliert wird, bis die schadhafte Batteriezelle ausgetauscht ist.

Der Schutzschild verhindert dadurch ein so genanntes "thermisches Durchgehen", also eine Überhitzung des gesamten Batteriesystems.

Der Schutzschild kann zwischen prismatischen Batteriezellen oder in Pouchzellen nahezu bauraumneutral eingesetzt werden.

### Stand der Technik

Der Erfindung liegt die Aufgabe zugrunde, ein Schutzschild und ein Batteriesystem, das ein solchen Schutzschild umfasst, derart weiterzuentwickeln, dass der Schutzschild eine größere Verformbarkeit bei weiterhin gutem thermischen Isolationsvermögen aufweist und dass das Batteriesystem dadurch besser vor einem thermischen Durchgehen geschützt ist.

Diese Aufgabe wird erfindungsgemäß durch ein Schutzschild gemäß Anspruch 1 und ein Batteriesystem gemäß Anspruch 16 gelöst.

### Darstellung der Erfindung

Zur Lösung der Aufgabe ist ein Schutzschild aus einem gummielastischen Werkstoff vorgesehen, umfassend eine Zentrallage mit zwei einander gegenüberliegenden Oberflächen, wobei jede der Oberflächen eine leistenförmige Oberflächenstruktur mit sich parallel zueinander erstreckenden Leisten aufweist, die auf den jeweiligen Oberflächen mit Abstand benachbart zueinander angeordnet sind und wobei die Leisten der beiden Oberflächenstrukturen, im Querschnitt des Schutzschilds betrachtet, einander auf Lücke zugeordnet sind.

Außerdem ist ein Batteriesystem vorgesehen, das ein solchen Schutzschild umfasst.

Durch die mit Abstand benachbart zueinander angeordneten und sich parallel zueinander erstreckenden Leisten, die die Oberflächenstrukturen auf den einander gegenüberliegenden Oberflächen bilden, ergibt sich eine gute Verformbarkeit im Sinne einer guten Elastizität, Flexibilität und Kompressibilität. Insbesondere die gute Kompressibilität des Schutzschilds ergibt sich dadurch, dass der gummielastische Werkstoff bei mechanischer Druckbelastung senkrecht zu den Oberflächen in Freiräume zwischen den Leisten ausweichen kann. Dadurch kann zur Herstellung des Schutzschilds auch ein Werkstoff zur Anwendung gelangen, der per Definition inkompressibel ist, wie beispielsweise ein Elastomer.

Eine weiter verbesserte Verformbarkeit, insbesondere eine weiter verbesserte Kompressibilität wird dadurch erreicht, dass die Leisten der beiderseits der Zentrallage angeordneten Oberflächenstrukturen, im Querschnitt des Schutzschilds betrachtet, einander auf Lücke zugeordnet sind. Befindet sich der Schutzschild zwischen zwei benachbart zueinander angeordneten Batteriezellen und wird von diesen unter elastischer Vorspannung anliegend berührt, stellt sich durch die Zuordnung der Leisten auf Lücke eine, im Querschnitt des Schutzschilds betrachtet, sinusähnliche Gestalt der Zentrallage ein, so dass der Schutzschild während seiner bestimmungsgemäßen Verwendung insgesamt nur eine Dicke aufweist, die im Wesentlichen der Dicke der Zentrallage und der Höhe nur einer Leiste entspricht. Die Leisten einer Oberflächenstruktur werden dabei in den Lücken der anderen Oberflächenstruktur im Wesentlichen aufgenommen.

Dadurch weist der Schutzschild während seiner bestimmungsgemäßen Verwendung eine Dicke auf, die im Wesentlichen nur halb so dick ist, wie die herstellungsbedingte Dicke des Schutzschilds. Durch die erfindungsgemäße Ausgestaltung ist die Dicke des Schutzschilds während seiner bestimmungsgemäßen Verwendung minimal.

Der Hitzeschutz wird nicht nur durch den gummielastischen Werkstoff bewirkt, aus dem der Schutzschild besteht, sondern außerdem durch die gute Wärmeisolation von Luft, die um die Leisten in den entsprechenden Lücken der Oberflächenstrukturen ist.

Durch die gute Wärmeisolation, die durch die zuvor beschriebene Ausgestaltung des Schutzschilds wesentlich bedingt ist, sind die in einem Batteriesystem angeordneten Batteriezellen vor einem thermischen Durchgehen auch in einem Schadensfall gut geschützt, wenn zum Beispiel eine der Batteriezellen schadhaft ist.

Das mit dem Schutzschild versehene Batteriesystem erfüllt hohe Sicherheitsanforderungen und weist kompakte Abmessungen auf.

Eine Druckkraft-Verformungs-Kennlinie des Schutzschilds weist eine plateauähnliche Kurvencharakteristik auf.

Wird der Schutzschild zwischen benachbarten Batteriezellen verpresst, also auf Druck belastet, zeigt sich typischerweise eine solche, stark progressive Druckkraft-Verformungs-Kennlinie. Die Kennlinie weist einen mittleren Bereich auf, der wie ein Plateau praktisch waagerecht verläuft, bei dem sich der Werkstoff, aus dem der Schutzschild besteht, erheblich verformt, ohne dass sich dafür die Druckkraft wesentlich verändert.

Der gummielastische Werkstoff kann beispielsweise ein Elastomer oder ein thermoplastisches Elastomer sein.

Elastomere haben den Vorteil, dass sie ihre Elastizität bis in hohe Dehnungen und hohe Temperaturen behalten.

Demgegenüber haben thermoplastische Elastomere den Vorteil, dass sie günstig herstellbar sind und ebenfalls gute elastische Eigenschaften aufweisen.

Alle Leisten der Oberflächenstrukturen können, im Querschnitt betrachtet, im Wesentlichen übereinstimmend ausgebildet sein. Hierbei ist von Vorteil, dass der Schutzschild dadurch einfach und prozesssicher herstellbar ist und dass sich die Leisten während der bestimmungsgemäßen Verwendung des Schutzschilds gut in die jeweils gegenüberliegenden Lücken einfügen. Die Wärmeisolation ist dadurch bei minimaler Dicke des Schutzschilds maximiert. Außerdem ist von Vorteil, dass sich dadurch eine zum Beispiel optische Qualitätskontrolle im Anschluss an die Herstellung des Schutzschilds vereinfacht.

Die beiden Endleisten, die die einander gegenüberliegenden Enden des Schutzschilds begrenzen, können abweichend zu den im Wesentlichen übereinstimmend ausgebildeten Leisten zwischen den beiden Endleisten ausgebildet sein. Dadurch kann der Schutzschild gut an die jeweilige Einbausituation angepasst werden, insbesondere kann die abweichende Ausgestaltung gewählt werden, um ein Wegrutschen des Schutzschilds während seiner Montage und während seiner bestimmungsgemäßen Verwendung zu erschweren.

Werden die beiden aneinander gegenüberliegenden Oberflächen des Schutzschilds senkrecht zu den Oberflächen gegeneinander verpresst, bewegen sich die Leisten in die den Leisten jeweils gegenüberliegenden Lücken, wobei die Zentrallage eine hoch verformbare Scher- und Zugspannungs-Feder bildet, während die Leisten selbst, bezogen auf die Zentrallage, weniger flexibel sind und Druckfedern bilden.

Die Zentrallage verhält sich in den Abschnitten zwischen zwei einander gegenüberliegenden Leisten jeweils wie ein beidseitig eingespannter breiter und kurzer Biegebalken. Bei elastischer Verpressung wird die den Leisten zugewandte Seite unter Druck gesetzt, während die jeweilige Rückseite der Zentrallage gegenüber der Leiste unter Zugspannung steht und gedehnt wird. Durch den geringen Abstand zwischen den gegenüberliegenden Leisten führt die Verformung zu Spannungen in den Abschnitten der Zentrallage zwischen den Leisten. Durch die hohe Elastizität des Werkstoffs werden hervorgerufene Spannungen im Material gehalten und bei Entlastung kehrt der Schutzschild in seine Ausgangsform zurück.

Die elastische Verformung bei senkrechtem Druck auf die einander gegenüberliegenden Oberflächen des Schutzschilds stoppt, wenn die jeweilige Rückseite der Zentrallage gegenüber einer Leiste die Oberfläche von einem Bauteil berührt, das der Schutzschild unter Vorspannung anliegend berührt. Die Oberfläche kann Bestandteil einer Batteriezellen sein.

In diesem verpressten Zustand des Schutzschilds sind die herstellungsbedingten Lücken zwischen den Leisten einer Oberflächenstruktur vom gummielastischen Werkstoff der Leisten der anderen Oberflächenstruktur praktisch ausgefüllt.

Gemäß einer vorteilhaften Ausgestaltung kann es vorgesehen sein, dass die Leisten, im Querschnitt betrachtet, schwalbenschwanzförmig ausgebildet sind. Schwalbenschwanzförmig ausgebildete Leisten legen sich besonders gut und platzsparend in die andererseits der Zentrallager angeordneten, kongruent ausgebildeten Lücken.

Die Leisten können, im Querschnitt betrachtet, auf ihren der Zentrallage zugewandten Seiten jeweils eine Basis mit einer ersten Breite aufweisen und auf ihren der Zentrallage abgewandten Seiten jeweils ein freies Ende mit einer zweiten Breite.

Die freien Enden der Leisten können, im Querschnitt betrachtet, gerundet ausgebildet sein. Hierbei ist von Vorteil, dass die Herstellung des Schutzschilds dadurch vereinfacht ist.

Der Schutzschild kann beispielsweise vorteilhaft durch Extrusion hergestellt werden.

Durch die zuvor beschriebene gerundete Ausgestaltung der freien Enden sind diese weniger anfällig für Fehlstellen; der Ausschuss bei Herstellung des Schutzschilds ist dadurch minimiert.

Ebenfalls fertigungstechnische Vorteile hat es, wenn die Zentrallage zwischen den Oberflächenstrukturen eine Dicke aufweist, wobei, jeweils im Querschnitt betrachtet, die Dicke im Wesentlichen der ersten Breite der Basis der Leisten entspricht. Die Zentrallage weist entlang ihrer Erstreckung dadurch eine im Wesentlichen konstante Dicke auf. Dabei ist von Vorteil, dass durch die gleichmäßige Dicke die Befüllung des Herstellungswerkzeugs mit dem Material während der Herstellung prozesstechnisch robust erfolgt und keine besonderen und aufwändigen Maßnahmen erforderlich sind.

Das Verhältnis aus der zweiten Breite des freien Endes und der ersten Breite der Basis einer jeden Leiste kann bevorzugt 1,1 bis 3 betragen. Weiter bevorzugt beträgt das Verhältnis 1,5 bis 2,5.

Hierbei ist von Vorteil, dass durch die Verbreiterung des freien Endes der Kontaktdruck zu angrenzenden Bauteilen wirksam verringert werden kann, ohne nennenswerte Einbußen bei der maximalen Verpressbarkeit. Außerdem erhöht sich dadurch die Stabilität der Zentrallage gegen Verschiebungen quer zu den Leisten und gegen ein Umkippen der Leisten.

Die Leisten können, im Querschnitt betrachtet, eine Höhe von der Basis bis zum freien Ende aufweisen, wobei das Verhältnis aus Abstand einander benachbarter Basen zur Höhe 1 bis 4 beträgt. Hierbei ist von Vorteil, dass sich während der zuvor beschriebenen Kompression des Schutzschilds, wenn sich die Leisten also in die entsprechenden Lücken legen, die Leisten in den Lücken nicht verklemmen.

Eine unerwünscht hohe Materialbelastung, die zu einer Beschädigung des Schutzschilds führen könnte, wird dadurch vermieden.

Außerdem ist von Vorteil, dass durch die Höhe der Leisten der verformbare Weg bis zur maximalen Verpressung eingestellt werden kann. Dieser entspricht etwa dem Abstand zwischen der den Leisten abgewandten Rückseite der Zentrallage und der Ebene der freien Enden der Leisten auf der gleichen Seite der Zentrallage.

Nach einer ersten Ausgestaltung kann es vorgesehen sein, dass die Zentrallage und die Oberflächenstruktur einstückig ineinander übergehend und materialeinheitlich ausgebildet sind. Ein solcher Schutzschild kann beispielsweise vorteilhaft durch Extrusion hergestellt werden. Die Herstellung ist dadurch einfach, prozesssicher und kostengünstig möglich.

Nach einer anderen Ausgestaltung kann es vorgesehen sein, dass die Leisten, jeweils bezogen auf die Zentrallage, separat erzeugt und mit der Zentrallage verbunden sind.

Die Leisten und die Zentrallage können kraft-, form- und/oder stoffschlüssig miteinander verbunden sein. Hierbei ist von Vorteil, dass die Zentrallage und die Leisten bedarfsweise jeweils funktionstechnisch individualisiert sein können. Beispielsweise besteht die Möglichkeit, die Leisten aus einem besonders gut wärmeisolierenden Material herzustellen, um die Hitzebeständigkeit des Schutzschilds zu verbessern. In Abhängigkeit von den Gegebenheiten des Anwendungsfalles könnte dadurch in Kauf genommen werden, dass die Leisten eine geringere Verformbarkeit als die Zentrallage aufweisen.

Bei einer solchen Ausgestaltung wäre die elastische Verformbarkeit des Schutzschilds insgesamt jedoch kaum nachteilig beeinflusst, weil sie maßgebend von der Zentrallage bestimmt wird.

Eine stoffschlüssige Verbindung ist besonders vorteilhaft, weil dafür nur wenig Platz benötigt wird. Als dünne Klebeschicht kann beispielsweise ein Silikonkleber verwendet werden.

Die Zentrallage kann im Wesentlichen eben oder zwischen einander gegenüberliegenden Leisten, bezogen auf eine gedachte ebene Zentrallage, zickzackförmig ausgebildet sein.

Die zickzackförmige Zentrallage begrenzt mit der gedachten ebenen Zentrallage jeweils bevorzugt einen Winkel, der 1° bis 35° beträgt.

Jeder Abschnitt der Zentrallage zwischen einander gegenüberliegenden Leisten ist dabei derart angewinkelt, dass bei gleicher Gesamtdicke des Schutzschilds die Leisten niedriger ausgeführt werden und damit die Zentrallage alternierend von Leiste zu Leiste in der Zickzack-Form einen Teil der Gesamtdicke überbrückt. Dadurch erhöht sich aufgrund des größeren Abstands zwischen der den Leisten zugewandten Rückseite der Zentrallage und der Ebene der freien Enden der benachbarten Leisten die maximale Verformbarkeit. Außerdem ist von Vorteil, dass der Schutzschild bei anfänglicher Verpressung eine hohe Steifigkeit aufweist und bei zunehmender Verpressung diese nachlässt und damit die zuvor beschriebene, gewünschte plateauförmige Druckkraft-Verformungs-Charakteristik erzeugt wird.

Außerdem betrifft die Erfindung ein Batteriesystem, umfassend zumindest zwei benachbart zueinander angeordnete Batteriezellen, wobei zwischen den Batteriezellen ein Schutzschild, wie zuvor beschrieben, angeordnet ist, wobei der Schutzschild von den Batteriezellen unter elastischer Vorspannung anliegend berührt ist. Die Batteriezellen sind dabei prismatisch oder durch Pouchzellen gebildet. Prismatische Batteriezellen oder Pouchzellen weisen eine im Wesentlichen ebene Oberfläche auf und berühren die Leisten der leistenförmigen Oberflächenstrukturen der einander gegenüberliegenden Oberflächen flächig anliegend. Die Wärmeisolation ist dadurch besonders wirksam.

### Kurzbeschreibung der Zeichnung

Zwei Ausführungsbeispiele eines erfindungsgemäßen Schutzschilds als Bestandteil eines Batteriesystems sind in den Figuren 1 bis 4 schematisch dargestellt und werden nachfolgend näher beschrieben.
Figur 1 zeigt ein erstes Ausführungsbeispiel eines Schutzschilds mit zickzackförmiger Zentrallage in seinem herstellungsbedingten Zustand in unterschiedlichen Ansichten,
Figur 2 zeigt ein zweites Ausführungsbeispiel des Schutzschilds mit ebener Zentrallage,
Figur 3 zeigt ein erstes Ausführungsbeispiel eines Batteriesystems, das den Schutzschild aus Figur 1 umfasst, während seiner bestimmungsgemäßen Verwendung,
Figur 4 zeigt ein zweites Ausführungsbeispiel eines Batteriesystems mit dem Schutzschild aus Figur 2.

### Ausführung der Erfindung

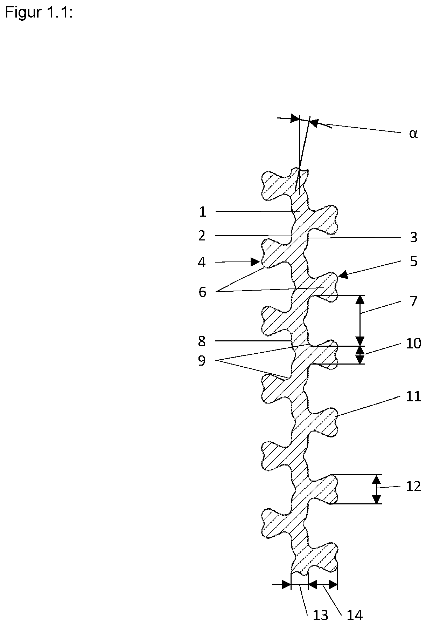

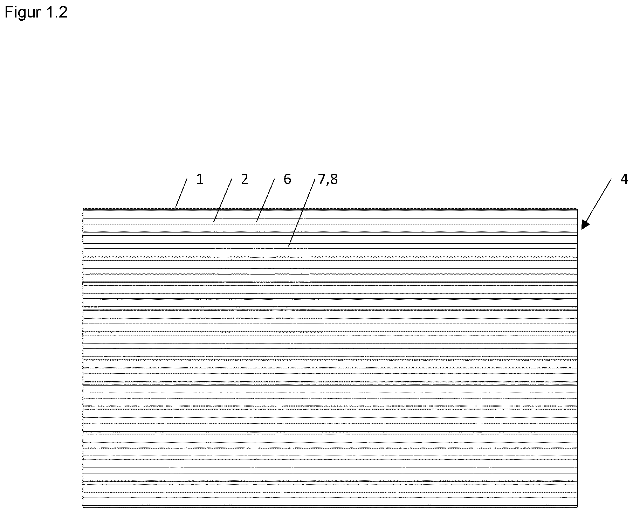

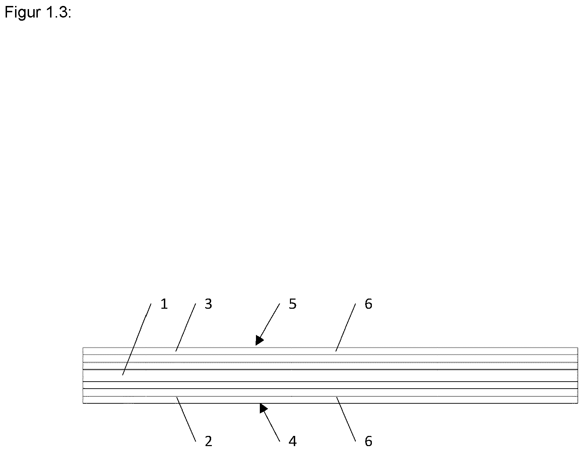

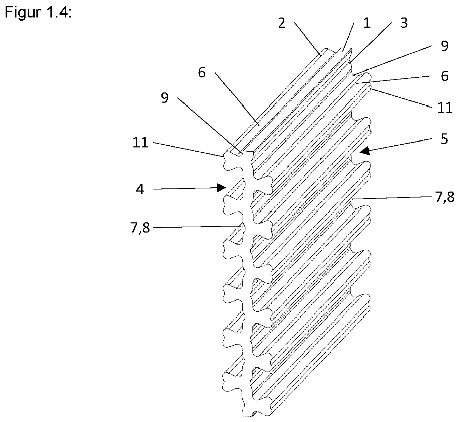

In Figur 1 ist ein erstes Ausführungsbeispiel eines Schutzschilds in seinem herstellungsbedingten Zustand gezeigt.

Figur 1.1 zeigt den Schutzschild im Querschnitt,

Figur 1.2 zeigt den Schutzschild aus Figur 1.1 in einer Ansicht von links und

Figur 1.3 zeigt den Schutzschild aus Figur 1.2 in einer Draufsicht.

In Figur 1.4 ist der Schutzschild in einer perspektivischen Darstellung gezeigt.

Der Schutzschild kann als Hitzeschild in einem Batteriesystem verwendet werden.

Der Schutzschild besteht aus einem gummielastischen Werkstoff und umfasst die Zentrallage 1 mit zwei einander gegenüberliegenden Oberflächen 2, 3. Jede der Oberflächen 2, 3 weist eine leistenförmige Oberflächenstruktur 4, 5 auf, wobei sich auf jeder Oberflächenstruktur 4, 5 Leisten 6 parallel zueinander erstrecken. Auf jeder Oberfläche 2, 3 sind die entsprechenden Leisten 6 mit Abstand 7 benachbart zueinander angeordnet. Die Leisten 6 der beiden Oberflächenstrukturen 4, 5 sind, im Querschnitt des Schutzschilds betrachtet, einander auf Lücke 8 zugeordnet.

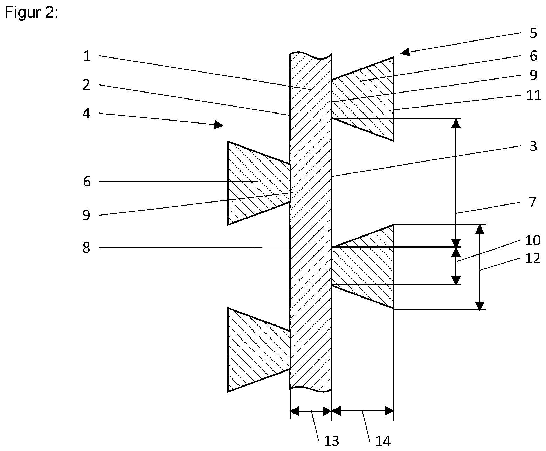

Die Zentrallage 1 ist zwischen einander gegenüberliegenden Leisten 6, bezogen auf eine ebene Zentrallage, wie zum Beispiel in Figur 2 dargestellt, zickzackförmig ausgebildet. Die Winkel α betragen im gezeigten Ausführungsbeispiel 10° bis 25°.

Durch die zickzackförmige Gestalt der Zentrallage 1 sind die Leisten 6 des Schutzschilds bei gleicher Gesamtdicke niedriger ausgeführt als beim Ausführungsbeispiel aus Figur 2, weil die Zickzack-Form einen Teil der Gesamtdicke überbrückt.

Alle Leisten 6 sind in diesem Ausführungsbeispiel, im Querschnitt betrachtet, übereinstimmend ausgebildet.

Die Leisten 6 haben einen schwalbenschwanzförmigen Querschnitt und auf ihren der Zentrallage 1 zugewandten Seiten jeweils eine Basis 9 mit einer ersten Breite 10 und auf ihren der Zentrallage 1 abgewandten Seiten jeweils ein freies Ende 11 mit einer zweiten Breite 12.

Das Verhältnis aus der zweiten Breite 12 des freien Endes 11 und der ersten Breite 10 der Basis 9 einer jeden Leiste 6 beträgt im hier gezeigten Ausführungsbeispiel etwa 2.

Die Leisten haben eine Höhe 14 von der Basis 9 bis zum freien Ende 11, wobei das Verhältnis aus Abstand 7 einander benachbarter Basen 9 zur Höhe 14 ebenfalls etwa 2 beträgt.

Dieses Verhältnis und das zuvor genannte Verhältnis sind also etwa gleich.

Der Schutzschild aus Figur 2 unterscheidet sich vom Schutzschild aus Figur 1.1 nur dadurch, dass die Zentrallage 1 eben ausgebildet ist und dass die Oberflächenstrukturen 4, 5 nicht, wie in Figur 1, einstückig ineinander übergehend und materialeinheitlich ausgebildet sind, sondern dass die Leisten 6, jeweils bezogen auf die Zentrallage 1, separat erzeugt und mit der Zentrallage 1 verbunden sind. Die Verbindung ist in diesem Ausführungsbeispiel stoffschlüssig, wobei die Verbindung durch eine dünne Schicht Silikonklebstoff hergestellt ist.

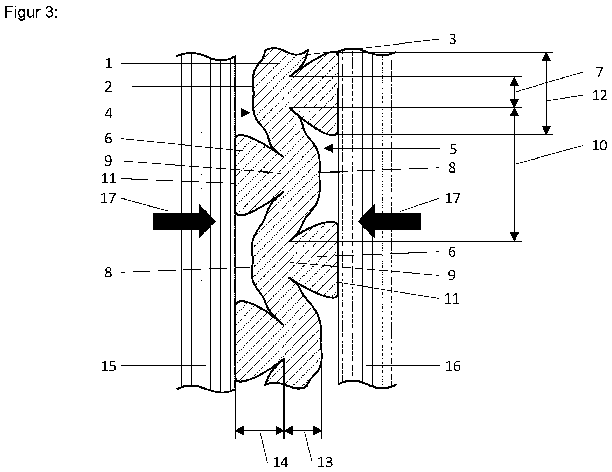

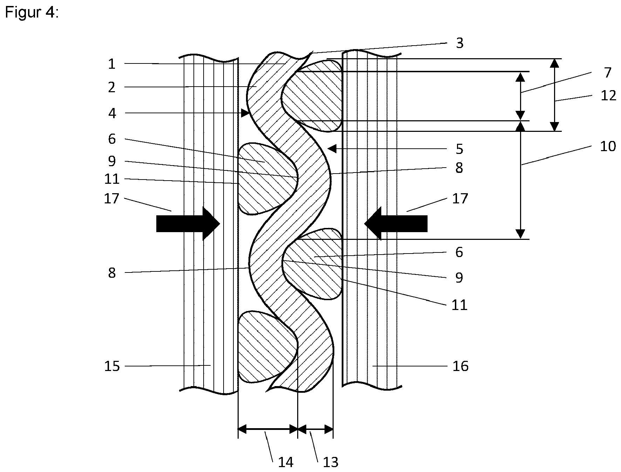

In den Figuren 3 und 4 sind die Schutzschilde aus den Figuren 1 und 2 jeweils während ihrer bestimmungsgemäßen Verwendung in einem Batteriesystem dargestellt.

In Figur 3 ist der Schutzschild aus Figur 1 unter elastischer Vorspannung anliegend zwischen Batteriezellen 15, 16 angeordnet, wobei die Batteriezellen prismatisch oder als Pouchzellen ausgebildet sind.

In Figur 4 ist zwischen den Batteriezellen 15, 16 demgegenüber der Schutzschild aus Figur 2 unter elastischer Vorspannung angeordnet.

Wie in den Darstellungen Figuren 3 und 4 zu erkennen, stellt sich während der bestimmungsgemäßen Verwendung der Schutzschilde eine im Querschnitt betrachtet im Wesentlichen sinusförmige Gestalt der Zentrallage 1 ein. Durch die Verpressung des Schutzschilds zwischen den Batteriezellen 15, 16 senkrecht zu den einander gegenüberliegenden Oberflächen 2, 3, wobei die Verpressung durch die Pfeile 17 angedeutet ist, bewegen sich die Leisten 6 zusammen mit der entsprechenden Basis 9 und dem mit der Basis 9 verbundenen Bereich der Zentrallage 1 in die gegenüberliegende Lücke 8 zwischen den gegenüberliegenden Leisten 6. Dadurch werden die Lücken 8 im Schutzschild weitgehend ausgefüllt, so dass sich durch die erfindungsgemäße Ausgestaltung des Schutzschilds sehr kompakte Abmessungen während der bestimmungsgemäßen Verwendung sowohl des Schutzschilds als auch des Batteriesystems ergeben, bei größtmöglicher Schutzwirkung. Die Schutzwirkung ergibt sich durch den Werkstoff, aus dem der Schutzschild besteht und aus der hohen Wärmeisolation von Luft, die sich noch in den Lücken 8 des Schutzschilds befindet.

## Patentansprüche

1. Schutzschild aus einem gummielastischen Werkstoff, umfassend eine Zentrallage (1) mit zwei einander gegenüberliegenden Oberflächen (2, 3), wobei jede der Oberflächen (2, 3) eine leistenförmige Oberflächenstruktur (4, 5) mit sich parallel zueinander erstreckenden Leisten (6) aufweist, die auf den jeweiligen Oberflächen (2, 3) mit Abstand (7) benachbart zueinander angeordnet sind und wobei die Leisten (6) der beiden Oberflächenstrukturen (4, 5), im Querschnitt des Schutzschilds betrachtet, einander auf Lücke (8) zugeordnet sind.

2. Schutzschild nach Anspruch 1, **dadurch gekennzeichnet, dass** alle Leisten (6), im Querschnitt betrachtet, übereinstimmend ausgebildet sind.

3. Schutzschild nach einem der Ansprüche 1 oder 2, **dadurch gekennzeichnet, dass** die Leisten (6), im Querschnitt betrachtet, schwalbenschwanzförmig ausgebildet sind.

4. Schutzschild nach einem der Ansprüche 1 bis 3, **dadurch gekennzeichnet, dass** die Leisten (6), im Querschnitt betrachtet, auf ihren der Zentrallage (1) zugewandten Seiten jeweils eine Basis (9) mit einer ersten Breite (10) aufweisen und auf ihren der Zentrallage (1) abgewandten Seiten jeweils ein freies Ende (11) mit einer zweiten Breite (12).

5. Schutzschild nach Anspruch 4, **dadurch gekennzeichnet, dass** die freien Enden (11), im Querschnitt betrachtet, gerundet ausgebildet sind.

6. Schutzschild nach einem der Ansprüche 1 bis 5, **dadurch gekennzeichnet, dass** die Zentrallage (1) zwischen den Oberflächenstrukturen (4, 5) eine Dicke (13) aufweist und dass, jeweils im Querschnitt betrachtet, die Dicke (13) im Wesentlichen der ersten Breite (10) der Basis (9) der Leisten (6) entspricht.

7. Schutzschild nach einem der Ansprüche 4 bis 6, **dadurch gekennzeichnet, dass** das Verhältnis aus der zweiten Breite (12) des freien Endes (11) und der ersten Breite (10) der Basis (9) einer jeden Leiste (6) 1,1 bis 3 beträgt.

8. Schutzschild nach Anspruch 7, **dadurch gekennzeichnet, dass** das Verhältnis 1,5 bis 2,5 beträgt.

9. Schutzschild nach einem der Ansprüche 4 bis 8, **dadurch gekennzeichnet, dass** die Leisten (6), im Querschnitt betrachtet, eine Höhe (14) von der Basis (9) bis zum freien Ende (11) aufweisen und dass das Verhältnis aus Abstand (7) einander benachbarter Basen (9) zur Höhe (14) 1 bis 4 beträgt.

10. Schutzschild nach einem der Ansprüche 1 bis 9, **dadurch gekennzeichnet, dass** die Zentrallage (1) und die Oberflächenstrukturen (4, 5) einstückig ineinander übergehend und materialeinheitlich ausgebildet sind.

11. Schutzschild nach einem der Ansprüche 1 bis 9, **dadurch gekennzeichnet, dass** die Leisten (6), jeweils bezogen auf die Zentrallage (1), separat erzeugt und mit der Zentrallage (1) verbunden sind.

12. Schutzschild nach Anspruch 11, **dadurch gekennzeichnet, dass** die Leisten (6) und die Zentrallage (1) kraft-, form- und/oder stoffschlüssig miteinander verbunden sind.

13. Schutzschild nach einem der Ansprüche 1 bis 12, **dadurch gekennzeichnet, dass** die Zentrallage (1) im Wesentlichen eben ausgebildet ist.

14. Schutzschild nach einem der Ansprüche 1 bis 12, **dadurch gekennzeichnet, dass** die Zentrallage (1) zwischen einander gegenüberliegenden Leisten (6), bezogen auf eine gedachte ebene Zentrallage, zickzackförmig ausgebildet ist.

15. Schutzschild nach Anspruch 14, **dadurch gekennzeichnet, dass** die zickzackförmige Zentrallage (1), mit der gedachten ebenen Zentrallage jeweils einen Winkel (α) begrenzt, der 1° bis 35° beträgt.

16. Batteriesystem, umfassend zumindest zwei benachbart zueinander angeordnete Batteriezellen (15, 16), **dadurch gekennzeichnet, dass** zwischen den Batteriezellen (15, 16) ein Schutzschild gemäß einem der Ansprüche 1 bis 15 angeordnet ist und dass der Schutzschild von den Batteriezellen (15, 16) unter elastischer Vorspannung anliegend berührt ist.
